(19) Europäisches Patentamt / European Patent Office / Office européen des brevets

(11) **EP 4 579 814 A1**

(12) **EUROPEAN PATENT APPLICATION**
published in accordance with Art. 153(4) EPC

(43) Date of publication:
**02.07.2025 Bulletin 2025/27**

(21) Application number: **22960227.1**

(22) Date of filing: **30.09.2022**

(51) International Patent Classification (IPC):
**H01M 4/583** (2010.01)

(52) Cooperative Patent Classification (CPC):
**H01M 4/583; Y02E 60/10**

(86) International application number:
**PCT/CN2022/123061**

(87) International publication number:
**WO 2024/065599 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
• **CHEN, Yusheng
Ningde, Fujian 352100 (CN)**
• **DONG, Jiali
Ningde, Fujian 352100 (CN)**
• **XIE, Yuansen
Ningde, Fujian 352100 (CN)**

(74) Representative: **Icosa
83 avenue Denfert-Rochereau
75014 Paris (FR)**

(54) **NEGATIVE ELECTRODE MATERIAL, SECONDARY BATTERY, AND ELECTRONIC DEVICE**

(57)     A negative electrode material is provided, including a carbon-based material. In a nitrogen adsorption/desorption test, the negative electrode material satisfies: S1/S2≥20%, and S2/S≥15%. S1 represents an adsorption volume of pores with a pore size less than or equal to 2 nm in the negative electrode material, and 0.0003 cm$^3$/g≤S1≤0.001 cm$^3$/g. S2 represents an adsorption volume of pores with a pore size greater than 2 nm and less than or equal to 10 nm in the negative electrode material, and 0.0008 cm$^3$/g≤S1≤0.0025 cm$^3$/g. S represents an adsorption volume of pores with a pore size less than or equal to 30 nm in the negative electrode material. The negative electrode material of this application has a high gram capacity and excellent kinetic performance, thus allowing a secondary battery including such negative electrode material to have both a high energy density and fast charging performance. A secondary battery including such negative electrode material is further provided.

BJH pore size distribution

FIG. 1

## Description

### TECHNICAL FIELD

This application relates to the field of energy storage, and in particular to, a negative electrode material, a secondary battery, and an electronic apparatus.

### BACKGROUND

As lithium-ion secondary batteries are widely used in various fields such as consumer electronics, electric vehicles, power tools, and energy storage, the market imposes increasingly high requirements on their performance. To meet a requirement of maximizing a battery life and minimizing a charging time for various products, the lithium batteries are required to have as high energy density and good kinetic performance as possible. Increasing the gram capacity and the powder compacted density of graphite, as a negative electrode material used most in lithium-ion batteries, can typically improve the energy density of lithium-ion batteries, and adjusting the specific surface area, defect content, and structural orientation of graphite can improve the kinetic performance of the lithium-ion batteries. It is difficult, in the prior art, to achieve the kinetic performance while ensuring improvement of energy density, and the effect of increasing the energy density is insignificant. Therefore, it is crucial to develop a graphite negative electrode required by the lithium batteries with higher energy density and kinetic performance.

### SUMMARY

In view of the defects in the prior art, this application provides a negative electrode material and a secondary battery including such negative electrode material. The negative electrode material of this application has a high gram capacity and excellent kinetic performance, thus allowing a secondary battery including such negative electrode material to have both a high energy density and fast charging performance.

According to a first aspect, this application provides a negative electrode material including a carbon-based material. In a nitrogen adsorption/desorption test, the negative electrode material satisfies: $S1/S2 \geq 20\%$, and $S2/S \geq 15\%$; where S1 represents an adsorption volume of pores with a pore size less than or equal to 2 nm in the negative electrode material, and $0.0003 \text{ cm}^3/\text{g} \leq S1 \leq 0.001 \text{ cm}^3/\text{g}$; S2 represents an adsorption volume of pores with a pore size greater than 2 nm and less than or equal to 10 nm in the negative electrode material, and $0.0008 \text{ cm}^3/\text{g} \leq S1 \leq 0.0025 \text{ cm}^3/\text{g}$; and S represents an adsorption volume of pores with a pore size less than or equal to 30 nm in the negative electrode material. The lithium intercalation manner of a conventional graphite negative-electrode material is inter-layer intercalation with a limited lithium intercalation capacity. The inventor in this application has found through research that treatment on the surface of the carbon-based material such as graphite for formation of pore structures in nanoscale can introduce a new lithium storage mechanism, that is, pore adsorption for lithium storage. This mechanism can greatly improve the lithium intercalation capability of graphite to obtain a higher gram capacity than the conventional graphite. Micropores with a pore size within 2 nm exerts the most significant effect of increasing the gram capacity, followed by mesopores with a pore size in a range of 2 nm to 10 nm. In addition, the porous structure can further provide rich deintercalation and intercalation sites for the lithium ions, shorten the transport distance of the lithium ions, and reduce the diffusion resistance of the lithium ions, allowing for good kinetic performance of the material. In this application, the adsorption volume of the pores with a pore size within 2 nm of the negative electrode material and the adsorption volume of the pores with a pore size greater than 2 nm and less than or equal to 10 nm are limited in the foregoing range, allowing the negative electrode material to have an appropriate number of nanopore structures in proper size. This can improve the kinetic performance while increasing the graphite gram capacity, thus obtaining the secondary battery with both a high energy density and fast charging performance.

In some embodiments, $20\% \leq S1/S2 \leq 60\%$. In some embodiments, $30\% \leq S1/S2 \leq 50\%$. In some embodiments, $15\% \leq S2/S \leq 50\%$. When the pore size or the number of the pores is excessively large, the specific surface area of the negative electrode material increases quickly, and the active area being exposed in the electrolyte environment also becomes larger, resulting in more side reactions and formation of the SEI film as well as excessive and irreversible capacity loss, thus impacting the capacity of the secondary battery. In addition, excessive electrolyte consumption reduces the cycle life of the battery. When the number of the pores is excessively small, the introduced pores have an excessively low lithium intercalation capacity and deintercalation and intercalation sites of the lithium ions show no significant difference from those of the conventional graphite material. As a result, the objective of improving both the energy density of the secondary battery and the kinetic performance cannot be achieved.

In some embodiments, $0.006 \text{ cm}^3/\text{g} \leq S \leq 0.008 \text{ cm}^3/\text{g}$. When S is excessively large, the level of material reaction is excessively high, excessive pores are formed on the surface, and the pore size is excessively large. This causes excessive side reactions and irreversible Li loss. When S is excessively small, the effect of providing adsorption sites for the lithium ions and accelerating the lithium-ion diffusion cannot be achieved.

In some embodiments, the carbon-based material includes a graphite material, and the graphite material includes natural graphite and/or artificial graphite.

In some embodiments, in an X-ray photoelectron spectroscopy test, a mass percentage of oxygen element in a surface of the negative electrode material is w, and $1\% \leq w \leq 6\%$. The percentage of oxygen element in surface can reflect the nanopore structures of the negative electrode material to some extent. When the percentage of oxygen element in surface is excessively low, no nanopore structures are formed on the surface, resulting in no effect of improving the gram capacity and the kinetic performance of the material. When the percentage of oxygen element in surface is excessively high, the formation of excessive pores and oxygen-containing functional groups reduces the initial coulombic efficiency and increases the electrolyte consumption. With the percentage of the oxygen element in the foregoing range, the negative electrode material has an appropriate number of nanopore structures in proper size, allowing for optimal gram capacity and improving the kinetic performance without impacting the other performance. In some embodiments, $2\% \leq w \leq 5\%$.

In some embodiments, a specific surface area of the negative electrode material is A, and $3.0 \ m^2/g \leq A \leq 8.0 \ m^2/g$. With the specific surface area in the foregoing range, pore structures in proper size and ratio are formed on the surface of the negative electrode material, allowing for optimal gram capacity and improving the kinetic performance without impacting the other performance. In some embodiments, $3.0 \ m^2/g \leq A \leq 6.0 \ m^2/g$.

In some embodiments, a powder compacted density of the negative electrode material is C, and $1.9 \ g/cm^3 \leq C \leq 2.1 \ g/cm^3$. When the powder compacted density C increases, the negative electrode material can be used for designing an electrode plate of a high compacted density, thus increasing the volume energy density of the secondary battery. However, when C is excessively large, the negative electrode material layers are excessively easy to slide with respect to each other and the material becomes soft. This reduces the bounce force of the electrode plate and the pores formed due to pileup of internal particles, resulting in difficult electrolyte infiltration and lithium-ion diffusion, thus impacting the performance of the secondary battery. In some embodiments, $1.95 \ g/cm^3 \leq C \leq 2.05 \ g/cm^3$.

In some embodiments, in a Raman test, the negative-electrode active material satisfies $0.1 \leq Id/Ig \leq 0.5$, where Id represents an intensity of a peak at $1350 \ cm^{-1}$ in a Raman spectrum, and Ig represents an intensity of a peak at $1580 \ cm^{-1}$ in the Raman spectrum. The value of Id/Ig can represent the defect content of the surface of the negative electrode material. A larger value represents higher defect content. High defect content contributes to quick deintercalation and intercalation of the lithium ions, thus improving the kinetic performance of the negative electrode material. However, excessive defects reduce the performance of the secondary battery, such as the initial coulombic efficiency and the cycling performance. With the value of Id/Ig in the foregoing range, the secondary battery can present good kinetics, and its performance such as initial coulombic efficiency and cycling performance does not decrease significantly. In some embodiments, $0.2 \leq Id/Ig \leq 0.4$.

In some embodiments, a preparation method of the negative electrode material includes: performing heat treatment on a graphite material with a pre-treated surface in an oxidizing atmosphere, especially an oxidizing atmosphere with low concentration at a temperature of 200°C to 500°C.

In some embodiments, the oxidizing atmosphere includes a mixture of $O_2/N_2$. In some embodiments, during heat treatment, the flow velocity of the oxidizing atmosphere is 6 L/min to 10 L/min. In some embodiments, the heat treatment is performed for 2 h to 5 h. In some embodiments, a volume concentration of $O_2$ in the mixture of $O_2/N_2$ is 1% to 5%.

According to a second aspect, this application provides a secondary battery including a negative electrode. The negative electrode includes a negative-electrode active material layer, and the negative-electrode active material layer includes the negative electrode material according to the first aspect.

In some embodiments, a compacted density of the negative electrode is P, and $1.75 \ g/cm^3 \leq P \leq 1.85 \ g/cm^3$. An excessively high compacted density of the negative electrode causes reduced pores in the negative electrode, making electrolyte infiltration difficult, thus reducing the kinetic performance. With the compacted density of the negative electrode in the foregoing range, the negative electrode plate has a higher compacted density than those conventionally designed, which can increase the volume energy density of the secondary battery and does not affect the kinetic performance of the secondary battery.

In some embodiments, in an X-ray diffraction test, a ratio of a diffraction peak area C004 of a crystal plane 004 of the negative electrode to a diffraction peak area C110 of a crystal plane 110 satisfies $8 \leq C004/C110 \leq 18$. When the negative electrode satisfies the design of a high compacted density, the crystal plane areas C110 and C004 satisfying the foregoing relation can ensure effective intercalation of the lithium ions.

According to a third aspect, this application provides an electronic apparatus including the secondary battery according to the second aspect.

**BRIEF DESCRIPTION OF DRAWINGS**

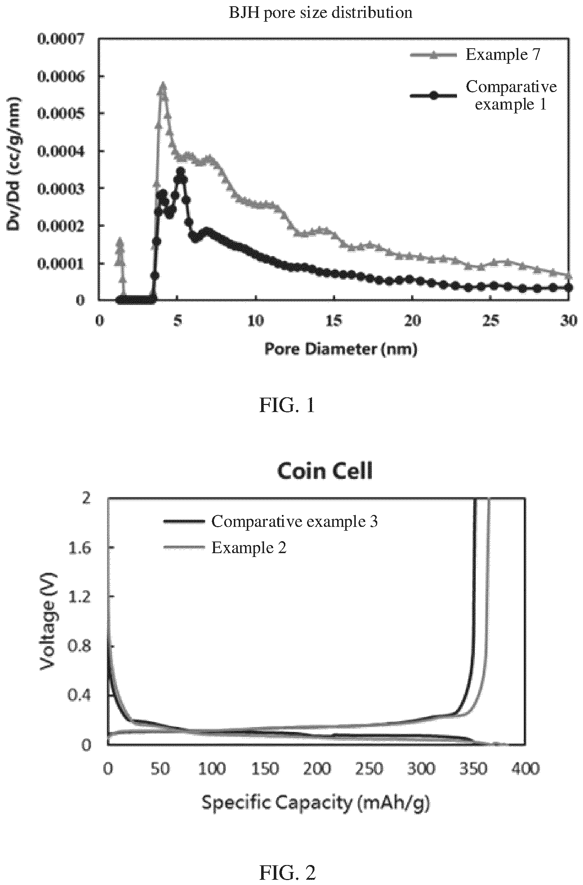

FIG. 1 shows pore size distributions in example 7 and comparative example 1 according to this application.

FIG. 2 shows charge and discharge curves of lithium-ion batteries in example 2 and comparative example 3 according to this application.

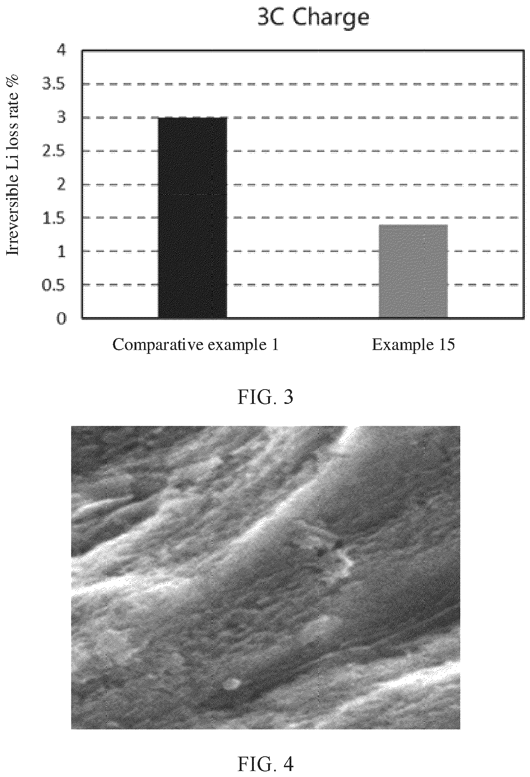

FIG. 3 shows irreversible lithium-ion loss of lithium-ion batteries in example 15 and comparative example 1 according to this application.

FIG. 4 is an SEM diagram of a negative electrode material in example 13 according to this application.

## DETAILED DESCRIPTION

For brevity, this application only specifically discloses some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit which can be combined with any other point or individual numerical value or combined with another lower limit or upper limit to form a range not expressly recorded.

In the descriptions of this application, unless otherwise specified, "more than" or "less than" is inclusive of the present number.

Unless otherwise specified, the terms used in this application have well known meanings commonly understood by persons skilled in the art. Unless otherwise specified, numerical values of parameters mentioned in this application may be measured using various measurement methods commonly used in the art (for example, they may be tested using the methods provided in the embodiments of this application).

A list of items connected by the terms "at least one of", "at least one piece of", "at least one kind of", or the like may mean any combination of the listed items. For example, if items A and B are listed, the phrase "at least one of A or B" means only A; only B; or A and B. In another example, if items A, B, and C are listed, the phrase "at least one of A, B, or C" means only A, only B, only C, A and B (excluding C), A and C (excluding B), B and C (excluding A), or all of A, B, and C. The item A may contain one or more constituents. The item B may contain one or more constituents. The item C may contain one or more constituents.

The following further describes this application with reference to specific embodiments. It should be understood that these specific embodiments are merely intended to describe this application instead of limiting the scope of this application.

I. Negative electrode material

A negative electrode material provided by this application includes a carbon-based material. In a nitrogen adsorption/desorption test, the negative electrode material satisfies: $S1/S2 \geq 20\%$, and $S2/S \geq 15\%$; where S1 represents an adsorption volume of pores with a pore size less than or equal to 2 nm in the negative electrode material, and $0.0003\ cm^3/g \leq S1 \leq 0.001\ cm^3/g$; S2 represents an adsorption volume of pores with a pore size greater than 2 nm and less than or equal to 10 nm in the negative electrode material, and $0.0008\ cm^3/g \leq S1 \leq 0.0025\ cm^3/g$; and S represents an adsorption volume of pores with a pore size less than or equal to 30 nm in the negative electrode material. The lithium intercalation manner of the conventional graphite negative-electrode material is inter-layer intercalation with a limited lithium intercalation capacity. The inventor in this application has found through research that treatment on the surface of the carbon-based material such as graphite for formation of pore structures in nanoscale can introduce a new lithium storage mechanism, that is, pore adsorption for lithium storage. This mechanism can greatly improve the lithium intercalation capability of graphite to obtain a higher gram capacity than the conventional graphite. A micropore with a pore size within 2 nm exerts the most significant effect of increasing the gram capacity, followed by a mesopore with a pore size in a range of 2 nm to 10 nm. In addition, the porous structure can further provide rich deintercalation and intercalation sites for the lithium ions, shorten the transport distance of the lithium ions, and reduce the diffusion resistance of the lithium ions, allowing for good kinetic performance of the material. In this application, the adsorption volume of the pores with a pore size within 2 nm of the negative electrode material and the adsorption volume of the pores with a pore size greater than 2 nm and less than or equal to 10 nm are limited in the foregoing range, allowing the negative electrode material to have an appropriate number of nanopore structures in proper size. This can improve the kinetic performance while increasing the graphite gram capacity, thus obtaining the secondary battery with both a high energy density and fast charging performance.

In some embodiments, $20\% \leq S1/S2 \leq 60\%$. In some embodiments, S1/S2 is 23%, 25%, 27%, 29%, 33%, 35%, 37%, 40%, 43%, 45%, 47%, 50%, 53%, 55%, 57%, or in a range defined by any two of these values. In some embodiments, $30\% \leq S1/S2 \leq 50\%$.

In some embodiments, $15\% \leq S2/S \leq 50\%$. In some embodiments, S2/S is 17%, 20%, 23%, 25%, 27%, 29%, 33%, 35%, 37%, 40%, 43%, 45%, 47%, or in a range defined by any two of these values.

When the pore size or the number of the pores is excessively large, the specific surface area of the negative electrode material increases quickly, and the active area of being exposed in the electrolyte environment also becomes larger, resulting in more side reactions and formation of the SEI film as well as excessive and irreversible capacity loss, thus impacting the capacity of the secondary battery. In addition, excessive electrolyte consumption reduces the cycle life of the battery. When the number of the pores is excessively small, the introduced pores have an excessively low lithium intercalation capacity and deintercalation and intercalation sites of the lithium ions show no significant difference from those of the conventional graphite material. As a result, the objective of improving both the energy density of the secondary battery and the kinetic performance cannot be achieved.

In some embodiments, S1 is 0.00035 $cm^3/g$, 0.0004 $cm^3/g$, 0.00045 $cm^3/g$, 0.0005 $cm^3/g$, 0.00055 $cm^3/g$, 0.0006 $cm^3/g$, 0.00065 $cm^3/g$, 0.0007 $cm^3/g$, 0.00075 $cm^3/g$, 0.0008 $cm^3/g$, 0.00085 $cm^3/g$, 0.0009 $cm^3/g$, 0.0095 $cm^3/g$, or in a range defined by any two of these values. In some embodiments, S2 is 0.0008 $cm^3/g$, 0.0009 $cm^3/g$, 0.001 $cm^3/g$, 0.0011 $cm^3/g$, 0.0012 $cm^3/g$, 0.0013 $cm^3/g$, 0.0014 $cm^3/g$, 0.0015 $cm^3/g$, 0.0016 $cm^3/g$, 0.0017 $cm^3/g$, 0.0018 $cm^3/g$, 0.002 $cm^3/g$, 0.0021 $cm^3/g$, 0.0022 $cm^3/g$, 0.0023 $cm^3/g$, 0.0024 $cm^3/g$, or in a range defined by any two of these values.

In some embodiments, 0.006 $cm^3/g{\leq}S{\leq}0.008$ $cm^3/g$. In some embodiments, S is 0.0061 $cm^3/g$, 0.0062 $cm^3/g$, 0.0063 $cm^3/g$, 0.0064 $cm^3/g$, 0.0065 $cm^3/g$, 0.0066 $cm^3/g$, 0.0067 $cm^3/g$, 0.0068 $cm^3/g$, 0.0069 $cm^3/g$, 0.007 $cm^3/g$, 0.0071 $cm^3/g$, 0.0072 $cm^3/g$, 0.0073 $cm^3/g$, 0.0074 $cm^3/g$, 0.0075 $cm^3/g$, 0.0076 $cm^3/g$, 0.0077 $cm^3/g$, 0.0078 $cm^3/g$, 0.0079 $cm^3/g$, or in a range defined by any two of these values. When S is excessively large, the level of material reaction is excessively high, excessive pores are formed on the surface, and the pore size is excessively large. This causes excessive side reactions and irreversible Li loss. When S is excessively small, the effect of providing adsorption sites for the lithium ions and accelerating the lithium-ion diffusion cannot be achieved.

In some embodiments, the carbon-based material includes a graphite material, and the graphite material includes natural graphite and/or artificial graphite.

In some embodiments, in an X-ray photoelectron spectroscopy test, a mass percentage of oxygen element in the surface of the negative electrode material is w, and $1\%{\leq}w{\leq}6\%$. In some embodiments, w is 1.3%, 1.5%, 1.7%, 1.9%, 2.3%, 2.5%, 2.7%, 3.0%, 33%, 35%, 37%, 4.0%, 4.3%, 4.5%, 4.7%, 4.9%, 5.3%, 5.5%, 5.7%, or in a range defined by any two of these values. The percentage of oxygen element in surface can reflect the nanopore structures of the negative electrode material to some extent. When the percentage of oxygen element in surface is excessively low, no nanopore structures are formed on the surface, resulting in no effect of improving the gram capacity and the kinetic performance of the material. When the percentage of oxygen element in surface is excessively high, the formation of excessive pores and oxygen-containing functional groups reduces the initial coulombic efficiency and increases the electrolyte consumption. With the percentage of the oxygen element in the foregoing range, the negative electrode material has an appropriate number of nanopore structures in proper size, allowing for optimal gram capacity and improving the kinetic performance without impacting the other performance. In some embodiments, $2\%{\leq}w{\leq}5\%$.

In some embodiments, a specific surface area of the negative electrode material is A, and $3.0$ $m^2/g{\leq}A{\leq}8.0$ $m^2/g$. In some embodiments, A is 3.5 $g/cm^2$, 4 $g/cm^2$, 4.5 $g/cm^2$, 5 $g/cm^2$, 5.5 $g/cm^2$, 6.5 $g/cm^2$, 7 $g/cm^2$, 7.5 $g/cm^2$, or in a range defined by any two of these values. With the specific surface area in the foregoing range, pore structures in proper size and ratio are formed on the surface of the negative electrode material, allowing for optimal gram capacity and improving the kinetic performance without impacting the other performance. In some embodiments, $3.0$ $m^2/g{\leq}A{\leq}6.0$ $m^2/g$.

In some embodiments, a powder compacted density of the negative electrode material is C, and $1.9$ $g/cm^3{\leq}C{\leq}2.1$ $g/cm^3$. In some embodiments, C is 1.92 $g/cm^3$, 1.94 $g/cm^3$, 1.96 $g/cm^3$, 1.98 $g/cm^3$, 2.0 $g/cm^3$, 2.02 $g/cm^3$, 2.04 $g/cm^3$, 2.06 $g/cm^3$, 2.08 $g/cm^3$, or in a range defined by any two of these values. When the powder compacted density C increases, the negative electrode material can be used for designing an electrode plate of a high compacted density, thus increasing the volume energy density of the secondary battery. However, when C is excessively large, the negative electrode material layers are excessively easy to slide with respect to each other and the material becomes soft. This reduces the bounce force of the electrode plate and the pores formed due to pileup of internal particles, resulting in difficult electrolyte infiltration and lithium-ion diffusion, thus impacting the performance of the secondary battery. In some embodiments, $1.95$ $g/cm^3{\leq}C{\leq}2.05$ $g/cm^3$.

In some embodiments, in a Raman test, the negative-electrode active material satisfies $0.1{\leq}Id/Ig{\leq}0.5$, where Id represents an intensity of a peak at 1350 $cm^{-1}$ in a Raman spectrum, and Ig represents an intensity of a peak at 1580 $cm^{-1}$ in the Raman spectrum. In some embodiments, the value of Id/Ig is 0.1, 0.15, 0.2, 0.25, 0.3, 0.35, 0.4, 0.45, or in a range defined by any two of these values. The value of Id/Ig can represent the defect content of the surface of the negative electrode material. A larger value represents higher defect content. High defect content contributes to quick deintercalation and intercalation of the lithium ions, thus improving the kinetic performance of the negative electrode material. However, excessive defects reduce the performance of the secondary battery, such as the initial coulombic efficiency and the cycling performance. With the value of Id/Ig in the foregoing range, the secondary battery can present good kinetics, and its performance such as initial coulombic efficiency and cycling performance does not decrease significantly. In some embodiments, $0.2{\leq}Id/Ig{\leq}0.4$.

In some embodiments, a preparation method of the negative electrode material includes: 1. preparation of graphite material. The graphite material includes artificial graphite and/or natural graphite. The artificial graphite is obtained through the high-temperature graphitization on carbonaceous materials such as needle coke, petroleum coke, pitch coke, and biomass. The natural graphite is obtained by spheroidizing natural flake graphite. 2. Pretreatment on surface of graphite material. A specified mass of graphite material in step 1 is weighed. The surface is first pre-treated by the following method: The graphite material, after its surface is coated, is carbonized for, for example, 4h under an inert atmosphere condition at 900°C to 1200°C, for example, 1000°C, and then is subjected to surface etching. A used coating agent includes at least one of asphalt, tar, or a resin-like organic substance, and a mass ratio of the coating agent to the graphite material is (1-5):(99-95). An etching reaction method includes one of high-temperature gas-phase reaction, liquid-phase heating reaction, and high-temperature solid-phase reaction. The gas source used in the high-temperature gas-phase reaction includes one of an oxygen-containing atmosphere, carbon dioxide, nitrogen dioxide, and methane. The reactant used in the liquid-phase heating reaction includes one of $H_2O_2$, $(NH_4)_2S_2O_8$, concentrated sulfuric acid, and nitric acid. The reactant used in the high-temperature solid-phase reaction includes one of potassium permanganate, ammonium bicarbonate, and sodium bicarbonate. 3. Heat treatment process. Heat treatment is performed on the graphite material with the pre-treated surface in an oxidizing atmosphere to obtain the carbon-based material in this application at a temperature of 200°C to 500°C. In this application, the process such as the surface treatment enables the prepared carbon-based material to form pore structures in nanoscale, which can introduce a new lithium storage mechanism, that is, pore adsorption for lithium storage. This mechanism greatly improves the lithium intercalation capability of the carbon-based material to obtain a higher gram capacity than the conventional graphite. In addition, the multiple porous structures formed on the surface through heat treatment can further provide rich deintercalation and intercalation sites for the lithium ions, shorten the transport distance of the lithium ions, and reduce the diffusion resistance of the lithium ions, allowing for good kinetic performance of the material, thus improving the fast charging performance of the secondary battery.

In some embodiments, the temperature of heat treatment is 230°C, 250°C, 270°C, 300°C, 330°C, 350°C, 370°C, 400°C, 430°C, 450°C, 470°C, or in a range defined by any two of these values.

In some embodiments, during heat treatment, the flow velocity of the oxidizing atmosphere is 6 L/min to 10 L/min, for example, 6.5 L/min, 7 L/min, 7.5 L/min, 8 L/min, 8.5 L/min, 9 L/min, or 9.5 L/min. In some embodiments, the heat treatment is performed for 2 h to 5 h, for example, 2.5 h, 3 h, 3.5 h, 4 h, or 4.5 h.

In some embodiments, the oxidizing atmosphere includes a mixture of $O_2/N_2$. In some embodiments, the volume concentration of $O_2$ in the oxidizing atmosphere is 1%, 1.5%, 2%, 2.5%, 3%, 3.5%, 4%, 4.5%, 5%, or in a range defined by any two of these values.

## II. Secondary battery

The secondary battery provided by this application includes a negative electrode. The negative electrode includes a negative-electrode active material layer, and the negative-electrode active material layer includes the negative electrode material according to the first aspect.

In some embodiments, a compacted density of the negative electrode is P, and 1.75 g/cm$^3$≤P≤1.85 g/cm$^3$. In some embodiments, P is 1.76 g/cm$^3$, 1.77 g/cm$^3$, 1.78 g/cm$^3$, 1.79 g/cm$^3$, 1.80 g/cm$^3$, 1.81 g/cm$^3$, 1.82 g/cm$^3$, 1.83 g/cm$^3$, 1.84 g/cm$^3$, or in a range defined by any two of these values. An excessively high compacted density of the negative electrode causes reduced pores in the negative electrode, making electrolyte infiltration difficult, thus reducing the kinetic performance. With the compacted density of the negative electrode in the foregoing range, the negative electrode plate has a higher compacted density than those conventionally designed, which can increase the volume energy density of the secondary battery and does not affect the kinetic performance of the secondary battery.

In some embodiments, in an X-ray diffraction test, a ratio of a diffraction peak area C004 of a crystal plane 004 of the negative electrode to a diffraction peak area C110 of a crystal plane 110 satisfies 8≤C004/C110≤18. In some embodiments, C004/C110 may be 9, 10, 11, 12, 13, 14, 15, 16, 17, or in a range defined by any two of these values. When the negative electrode satisfies the design of a high compacted density, the crystal plane areas C110 and C004 satisfying the foregoing relation can ensure effective intercalation of the lithium ions.

In some embodiments, the negative electrode further includes a negative current collector, and the negative current collector includes a copper foil, an aluminum foil, a nickel foil, a stainless steel foil, a titanium foil, a nickel foam, a copper foam, a polymer substrate coated with conductive metal, or any combination thereof.

In some embodiments, the negative-electrode active material layer further includes a binder and a conductive agent. In some embodiments, the binder includes, but is not limited to: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(vinylidene fluoride), polyethylene, polypropylene, styrene-butadiene rubber, acrylic styrene-butadiene rubber, epoxy resin, nylon, or the like.

In some embodiments, the conductive agent includes, but is not limited to carbon-based materials, metal-based materials, conductive polymers, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

The secondary battery of this application further includes a positive electrode, the positive electrode includes a positive electrode current collector and a positive -electrode active material layer, and the positive -electrode active material layer includes a positive electrode active material, a binder, and a conductive agent.

According to some embodiments of this application, the positive electrode current collector may be a metal foil or a composite current collector. For example, an aluminum foil may be used. The composite current collector may be formed by forming a metal material (copper, copper alloy, nickel, nickel alloy, titanium, titanium alloy, silver, silver alloy, or the like) on a polymer matrix.

According to some embodiments of this application, the positive electrode active material includes at least one of lithium cobaltate, lithium nickel manganese cobalt oxide, lithium nickel manganese aluminum oxide, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel lithium manganese oxide, spinel lithium nickel manganese oxide, or lithium titanium oxide. In some embodiments, the binder includes a binder polymer, for example, at least one of polyvinylidene fluoride, polytetrafluoroethylene, polyolefin, carboxymethyl cellulose sodium, carboxymethyl cellulose lithium, modified polyvinylidene fluoride, modified SBR rubber, or polyurethane. In some embodiments, the polyolefin binder includes at least one of polyethylene, polypropylene, polyethylene terephthalate, polyvinyl alcohol, or polyacrylic acid. In some embodiments, the conductive agent includes a carbon-based material, for example, natural graphite, artificial graphite, carbon black, acetylene black, Ketjen black, or carbon fiber; a metal-based material, for example, metal powder or metal fiber of copper, nickel, aluminum, silver; a conductive polymer, for example, a polyphenylene derivative; or any mixture thereof.

The secondary battery of this application further includes a separator. A material or shape of the separator used in the secondary battery of this application is not particularly limited, and may be based on any technology disclosed in the prior art. In some embodiments, the separator includes a polymer or an inorganic substance formed by a material stable to the electrolyte of this application.

For example, the separator may include a substrate layer and a surface treatment layer. The substrate layer is a non-woven fabric, a membrane, or a composite membrane having a porous structure, and a material of the substrate layer is selected from at least one of polyethylene, polypropylene, polyethylene terephthalate, or polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected.

The surface treatment layer is provided on at least one surface of the substrate layer, and the surface treatment layer may be a polymer layer or an inorganic substance layer, or may be a layer formed by a mixed polymer and an inorganic substance. The inorganic substance layer includes inorganic particles and a binder. The inorganic particles are selected from at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene. The polymer layer includes a polymer, and a material of the polymer is selected from at least one of polyamide, polyacrylonitrile, an acrylate polymer, polyacrylic acid, polyacrylate, polyvinylpyrrolidone, polyvinyl ether, polyvinylidene fluoride, or poly(vinylidene fluoride-hexafluoropropylene).

The secondary battery in this application further includes an electrolyte. The electrolyte that can be used in this application may be an electrolyte known in the prior art.

According to some embodiments of this application, the electrolyte includes an organic solvent, a lithium salt, and an optional additive. The organic solvent of the electrolyte in this application may be any organic solvent known in the prior art which can be used as a solvent of the electrolyte. An electrolyte salt used in the electrolyte according to this application is not limited, and may be any electrolyte salt. The additive of the electrolyte according to this application may be any additive known in the prior art which can be used as an additive of the electrolyte. In some embodiments, the organic solvent includes, but is not limited to: ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, for example, at least one of 1,3-dioxolane (DOL) or ethylene glycol dimethyl ether (DME). In some embodiments, the lithium salt includes at least one of an organic lithium salt or an inorganic lithium salt. In some embodiments, the lithium salt includes, but is not limited to: lithium hexafluorophosphate (LiPF$_6$), lithium tetrafluoroborate (LiBF$_4$), lithium difluorophosphate (LiPO$_2$F$_2$), lithium bistrifluoromethanesulfonimide LiN(CF$_3$SO$_2$)$_2$ (LiTFSI), lithium bis(fluorosulfonyl)imide Li(N(SO$_2$F)$_2$)(LiFSI), lithium bis(oxalate) borate LiB(C$_2$O$_4$)$_2$(LiBOB), or lithium difluoro(oxalato)borate LiBF$_2$(C$_2$O$_4$)(LiDFOB). In some embodiments, the additive includes at least one of fluorinated vinyl carbonate or adiponitrile.

According to some embodiments of this application, the secondary battery of this application includes but is not limited to a lithium-ion battery or a sodium-ion. In some embodiments, the secondary battery may be a lithium-ion battery.

III. Electronic apparatus

This application further provides an electronic apparatus, including the secondary battery according to the second aspect of this application.

The electronic device or apparatus in this application is not particularly limited. In some embodiments, the electronic device of this application includes, but is not limited to: a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

In the following the examples and comparative examples, all reagents, materials, and instruments used are commercially available unless otherwise specified.

**Examples and comparative examples**

**Example 1**

Preparation of negative electrode material

Artificial graphite of 5 kg, which was obtained by graphitizing pitch coke at 3000°C, was weighed and then asphalt was used as a coating agent to be well mixed with the artificial graphite (a mass ratio of asphalt to artificial graphite was 3:97). Then, the mixture was carbonized for 4 h in a nitrogen atmosphere at 1000°C to obtain a product with a pre-treated surface. Next, the product with a pre-treated surface was placed in an atmosphere furnace in a mixed atmosphere of $O_2/N_2$ with a volume concentration of $O_2$ being 1% and after a flow velocity of a mixture of gases was adjusted to 6 L/min, reacted for 2 h at 200°C to obtain a carbon-based material of this application, that is, a negative-electrode active material.

Preparation of negative electrode

The foregoing negative electrode material, a binder styrene-butadiene rubber (SBR for short), a thickener carboxymethyl cellulose sodium (CMC for short) were thoroughly stirred and mixed in a proper amount of a deionized water solvent at a mass ratio of 97:1.5:1.5 to form a uniform negative electrode slurry. This slurry was evenly applied onto a current collector Cu foil with a conductive coating of 1 $\mu$m, followed by drying and cold pressing, to obtain a negative electrode plate.

Preparation of electrolyte

In a dry argon atmosphere glove box, ethylene carbonate (EC), propylene carbonate (PC), ethyl methyl carbonate (EMC), and diethyl carbonate (DEC) were mixed at a mass ratio of EC:EMC:EMC:DEC=1:3:3:3. Then, fluorinated vinyl carbonate and 1,3-propane sultone were added therein, dissolved, and fully stirred, and the mixture was added with a lithium salt $LiPF_6$ and fully mixed again to obtain an electrolyte. A mass percentage of $LiPF_6$ was 12.5%, a mass percentage of fluorinated vinyl carbonate was 2%, a mass percentage of 1,3-propane sultone was 2%, and the mass percentage of each substance was calculated based on the mass of the electrolyte.

Preparation of separator

A porous polyethylene (PE) polymer film with a thickness of 7 $\mu$m was used as the separator with a porosity of 35%.

Preparation of button battery

The prepared negative electrode, separator, and electrolyte, a lithium sheet, a steel sheet, nickel foam, and a button battery housing were assembled to obtain a button battery.

**Examples 2 to 10 and comparative examples 1 to 5**

Preparation of negative electrode material

The preparation process of the negative electrode material was similar to that in example 1 with difference in that parameters such as an atmosphere flow velocity, temperature, and processing time were adjusted during preparation to prepare the corresponding negative electrode material. Specific preparation parameters are shown in Table a:

**Table a**

| Example and comparative example | Volume concentration of $O_2$ in a mixture of $O_2/N_2$ (%) | Flow velocity of mixture of $O_2/N_2$ (L/min) | Heating temperature (°C) | Heating time (h) |
|---|---|---|---|---|
| Example 1 | 1 | 6 | 200 | 2 |
| Example 2 | 3 | 6 | 250 | 2 |
| Example 3 | 2 | 6 | 250 | 2 |
| Example 4 | 1 | 6 | 300 | 2 |
| Example 5 | 1 | 6 | 350 | 2 |
| Example 6 | 1 | 6 | 450 | 2 |
| Example 7 | 3.5 | 6 | 450 | 2 |
| Example 8 | 3 | 6 | 400 | 2 |
| Example 9 | 3.5 | 6 | 500 | 2 |
| Example 10 | 4 | 6 | 450 | 2 |
| Example 11 | 5 | 6 | 500 | 2 |
| Comparative example 1 | / | / | / | / |
| Comparative example 2 | 1 | 6 | 230 | 2 |
| Comparative example 3 | 2 | 6 | 230 | 2 |
| Comparative example 4 | 1 | 6 | 260 | 2 |
| Comparative example 5 | 3 | 6 | 260 | 2 |
| Comparative example 6 | 1 | 4 | 200 | 2 |
| Comparative example 7 | 1 | 6 | 200 | 6 |

Preparation of the negative electrode and button battery was the same as that in example 1.

**Examples 11 to 20**

Preparation of negative electrode material

The preparation process of the negative electrode material was similar to that in example 10 with difference in that the flow velocity of the mixture of $O_2/N_2$ and the volume concentration of $O_2$ in the mixture were adjusted to adjust the percentage of the oxygen element in the surface of the negative electrode material. Specific preparation parameters are shown in Table b:

**Table b**

| Example | Volume concentration of $O_2$ in mixture of $O_2/N_2$ (%) | Flow velocity of mixture of $O_2/N_2$ (L/min) | Heating temperature (°C) | Heating time (h) |
|---|---|---|---|---|
| Example 10 | 4 | 6 | 450 | 2 |
| Example 11 | 4 | 6.5 | 450 | 2 |
| Example 12 | 4 | 7 | 450 | 2 |
| Example 13 | 4 | 7.5 | 450 | 2 |

(continued)

| Example | Volume concentration of $O_2$ in mixture of $O_2/N_2$ (%) | Flow velocity of mixture of $O_2/N_2$ (L/min) | Heating temperature (°C) | Heating time (h) |
|---|---|---|---|---|
| Example 14 | 4 | 8 | 450 | 2 |
| Example 15 | 4 | 8.5 | 450 | 2 |
| Example 16 | 4 | 9 | 450 | 2 |
| Example 17 | 4 | 9.5 | 450 | 2 |
| Example 18 | 4 | 10 | 450 | 2 |
| Example 19 | 1 | 10 | 450 | 2 |
| Example 20 | 3 | 10 | 450 | 2 |

Preparation of the negative electrode and button battery was the same as that in example 10.

**Examples 21 to 25**

Preparation of negative electrode material

The preparation process of the negative electrode material was similar to that in example 13 with difference in that the processing time was adjusted to adjust the specific surface area of the negative electrode material. Specific preparation parameters are shown in Table c:

**Table c**

| Example | Volume concentration of $O_2$ in mixture of $O_2/N_2$ (%) | Flow velocity of mixture of $O_2/N_2$ (L/min) | Heating temperature (°C) | Heating time (h) |
|---|---|---|---|---|
| Example 13 | 4 | 7.5 | 450 | 2 |
| Example 21 | 4 | 7.5 | 450 | 2.5 |
| Example 22 | 4 | 7.5 | 450 | 3 |
| Example 23 | 4 | 7.5 | 450 | 3.5 |
| Example 24 | 4 | 7.5 | 450 | 4 |
| Example 25 | 4 | 7.5 | 450 | 5 |

Preparation of the negative electrode and button battery was the same as that in example 13.

**Examples 26 to 30**

The preparation process of the negative electrode material was similar to that in example 25 with difference in that the processing temperature and the flow velocity of the mixture of $O_2/N_2$ were adjusted to adjust the powder compacted density of the negative electrode material. Specific preparation parameters are shown in Table d:

**Table d**

| Example | Volume concentration of $O_2$ in mixture of $O_2/N_2$ (%) | Flow velocity of mixture of $O_2/N_2$ (L/min) | Heating temperature (°C) | Heating time (h) |
|---|---|---|---|---|
| Example 25 | 4 | 7.5 | 450 | 5 |
| Example 26 | 4 | 7.5 | 450 | 5 |
| Example 27 | 4 | 8.5 | 470 | 5 |
| Example 28 | 4 | 8.5 | 470 | 5 |
| Example 29 | 4 | 9.5 | 500 | 5 |

(continued)

| Example | Volume concentration of $O_2$ in mixture of $O_2/N_2$ (%) | Flow velocity of mixture of $O_2/N_2$ (L/min) | Heating temperature (°C) | Heating time (h) |
|---|---|---|---|---|
| Example 30 | 4 | 9.5 | 500 | 5 |

Preparation of the negative electrode and button battery was the same as that in example 25.

**Examples 31 to 39**

The preparation process of the negative electrode material was similar to that in example 27 with difference in that the volume concentration of $O_2$ in the mixture of $O_2/N_2$ and the flow velocity were adjusted to adjust Id/Ig of the negative electrode material. Specific preparation parameters are shown in Table e:

**Table e**

| Example | Volume concentration of $O_2$ in mixture of $O_2/N_2$ (%) | Flow velocity of mixture of $O_2/N_2$ (L/min) | Heating temperature (°C) | Heating time (h) |
|---|---|---|---|---|
| Example 27 | 4 | 8.5 | 470 | 5 |
| Example 31 | 1 | 8.5 | 470 | 5 |
| Example 32 | 2 | 8.5 | 470 | 5 |
| Example 33 | 3 | 8.5 | 470 | 5 |
| Example 34 | 5 | 8.5 | 470 | 5 |
| Example 35 | 3.5 | 8.5 | 470 | 5 |
| Example 36 | 5 | 8 | 470 | 5 |
| Example 37 | 5 | 9 | 470 | 5 |
| Example 38 | 5 | 9.5 | 470 | 5 |
| Example 39 | 5 | 10 | 470 | 5 |

Preparation of the negative electrode and button battery was the same as that in example 27.

**Test methods**

**1. Test for pore size distribution of negative electrode material**

1) A negative electrode material sample of 20 g to 30 g was weighed for pressing, and then the pressed sample of 1.5 g to 3.5 g was weighed and placed in a test sample tube.

2) The sample was degassed for 2 h at 200°C.

3) High-purity nitrogen was then introduced, such that the sample in a liquid-nitrogen temperature environment adsorbed nitrogen until full adsorption.

4) Data was extracted from the obtained $N_2$ adsorption-desorption curve based on a BJH model to obtain a BJH pore size distribution curve, and integrated areas corresponding to different pore size ranges were calculated to obtain an adsorption volume of pores in the corresponding pore size range.

**2. Test for percentage of oxygen element in surface**

The sample was subjected to X-ray photoelectron spectroscopy scanning test using an XSAM-800 photoelectron spectrometer, Al Kα radiation was used as the main excitation source, and the obtained O1s spectral binding energy shift was calibrated based on the C1s standard binding energy of 284.5 eV.

**3. Powder compacted density test**

For the test standard of the powder compacted density, refer to GB/T 24533-2009 "Graphite Negative Electrode Materials for Lithium Ion Battery". A specific test method is as follows:
A negative electrode material sample of 1.0000±0.0500g was weighed and placed in a test mold (CARVER#3619(13mm)), and then the sample was placed in a test device. The test device was the SUNS UTM7305 tester with a capability of 0.3 t, 0.5 t, 0.75 t, 1.0 t, 1.5 t, 2.0 t, 2.5 t, 3.0 t, 4.0 t, or 5.0 t, a pressurization rate of 10 mm/min, pressurization dwell time of 30s, a depressurization rate of 30 mm/min, depressurization dwell time of 10s.
In this application, the powder compacted density was a compacted density measured after 5 t depressurization. Calculation formula for compacted density: compacted density=material mass/(material force-bearing area×sample thickness).

**4. Raman test for negative electrode material**

A laser microscopic confocal Raman spectrometer (Raman, HR Evolution, HORIBA Scientific Instruments) was used to scan a negative electrode active material, to obtain d peaks and g peaks of all particles in an area range. The data was processed using LabSpec software to obtain peak intensities of the d peak and g peak of each particle, that is, Id and Ig, respectively. Id/Ig was statistically calculated using a step size of 0.02 to obtain a normal distribution plot. (Id/Ig)max and (Id/Ig)min values of these particles were calculated to obtain the average of Id/Ig, that is, an Id/Ig value of the negative electrode active material. The laser wavelength of the Raman spectrometer may be in a range of 532 nm to 785 nm.
The d peak is typically around 1350 $cm^{-1}$ and caused by symmetric stretching vibration, of sp2 carbon atoms in aromatic rings, in a radial breathing mode (structural defects).
The g peak is typically around 1580 $cm^{-1}$ and caused by stretching vibration between sp2 carbon atoms, which corresponds to the vibration of the E2g optical phonon at the Brillouin zone center (in-plane vibration of carbon atoms).

**5. Gram capacity test**

The button battery was placed on a Land tester to be subjected to the following procedure: The button battery was discharged to 5 mv at 0.05C, left standing for 5 min, discharged to 5 mv at 0.05 mA, discharged to 5 mv at 0.01 mA, and charged to 2.0 V at 0.1C, and a charge capacity was obtained, which was then divided by the weight of the active material to obtain a gram capacity of the negative electrode material. The charge capacity was divided by a discharge capacity to obtain the initial coulombic efficiency of the negative electrode material.

**6. Test for irreversible Li loss rate**

The button battery was subjected to test for fast charging performance in the following test procedure:

    1) a test temperature was set to 25°C;
    2) being left standing for 10 min;
    3) being discharged to 3.0 V at 0.025C;
    4) being left standing for 10 min;
    5) being charged to 4.48 V at 3C and to 0.025C at a constant voltage;
    6) being left standing for 10 min;
    7) being discharged to 3.0 V at 0.025C;
    8) being left standing for 10 min; and
    9) being cycled 10 times from steps 5 to 8

A discharge capacity after the last cycle was recorded as D10, a charge capacity after the first cycle was recorded as C1, and irreversible Li loss rate Q=(C1-D10)/C1x100%.

**Test results**

Table 1 shows the effect of the BJH pore size distribution of the negative electrode material on the performance of the lithium-ion battery. S1 represents an adsorption volume of pores with a pore size less than or equal to 2 nm; S2 represents an adsorption volume of pores with a pore size greater than 2 nm and less than or equal to 10 nm; and S represents an adsorption volume of pores with a pore size less than or equal to 30 nm.

**Table 1**

| Example and comparative example | S1 (cm³/g) | S2 (cm³/g) | S (cm³/g) | S1/S2 | S2/S | Percentage of oxygen element (%) | Specific surface area (m²/g) | Powder compacted density (g/cm³) | Id/Ig | Gram capacity (mAh/g) | Initial coulombic efficiency (%) | Q (Li loss) (%) |
|---|---|---|---|---|---|---|---|---|---|---|---|---|
| Example 1 | 0.0003 | 0.0014 | 0.0060 | 21% | 23% | 2.2 | 3.1 | 1.96 | 0.22 | 362 | 94.8 | 1.3 |
| Example 2 | 0.0008 | 0.0019 | 0.0063 | 42% | 30% | 4.5 | 4.8 | 2.02 | 0.36 | 365 | 94.6 | 1.5 |
| Example 3 | 0.0009 | 0.0022 | 0.0064 | 41% | 34% | 4.1 | 4.3 | 2.00 | 0.31 | 363 | 94.5 | 1.7 |
| Example 4 | 0.0007 | 0.0015 | 0.0066 | 47% | 23% | 4.4 | 4.7 | 2.01 | 0.34 | 364 | 94.6 | 1.4 |
| Example 5 | 0.0004 | 0.0009 | 0.0061 | 44% | 15S | 3.1 | 3.9 | 1.99 | 0.30 | 362 | 94.7 | 1.5 |
| Example 6 | 0.0005 | 0.0014 | 0.0065 | 34% | 22% | 2.7 | 3.6 | 1.98 | 0.29 | 363 | 94.5 | 1.4 |
| Example 7 | 0.0009 | 0.0018 | 0.0066 | 49% | 27% | 4.3 | 5.5 | 2.03 | 0.35 | 364 | 94.4 | 1.7 |
| Example 8 | 0.0008 | 0.0023 | 0.0067 | 33% | 34% | 3.8 | 4.9 | 2.02 | 0.31 | 366 | 94.3 | 1.3 |
| Example 9 | 0.0008 | 0.0021 | 0.0069 | 40% | 30S | 4.8 | 5.9 | 2.05 | 0.37 | 365 | 93.8 | 1.3 |
| Example 10 | 0.0010 | 0.0025 | 0.0073 | 39% | 34% | 3.6 | 4.2 | 2.01 | 0.28 | 367 | 94.0 | 1.5 |
| Example 11 | 0.0014 | 0.0029 | 0.0072 | 48% | 40% | 5.3 | 5.9 | 2.04 | 0.43 | 366 | 92.9 | 1.4 |
| Comparative example 1 | / | 0.0002 | 0.005 | / | 4% | 2.0 | 2.3 | 1.95 | 0.20 | 353 | 95.1 | 3.0 |
| Comparative example 2 | / | 0.0005 | 0.0047 | / | 11% | 2.2 | 2.4 | 1.95 | 0.21 | 354 | 95.0 | 3.2 |
| Comparative example 3 | / | 0.0004 | 0.005 | / | 8% | 2.3 | 2.6 | 1.95 | 0.22 | 353 | 94.8 | 3.1 |
| Comparative example 4 | / | 0.0006 | 0.0049 | / | 12% | 2.2 | 2.7 | 1.96 | 0.23 | 355 | 94.8 | 2.9 |
| Comparative example 5 | / | 0.0008 | 0.0058 | / | 14% | 2.5 | 2.9 | 1.96 | 0.24 | 356 | 94.7 | 3.2 |
| Comparative example 6 | 0.0001 | 0.0018 | 0.0064 | 5.6% | 28% | 2.5 | 3.4 | 1.97 | 0.24 | 360 | 94.6 | 2.0 |
| Comparative example 7 | 0.0001 | 0.0036 | 0.0073 | 2.8% | 49% | 3.9 | 4.1 | 2.00 | 0.29 | 362 | 93.4 | 1.6 |

It can be seen from the data in Table 1 that when S1 satisfies 0.0003 cm$^3$/g≤S1≤0.001 cm$^3$/g, S2 satisfies 0.0008 cm3/g≤S2≤0.0025 cm$^3$/g, S1/S2 satisfies S1/S2≥20%, and S2/S satisfies S2/S≥15%, the graphite negative electrode has a higher gram capacity, which is conducive to preparing a secondary battery with a high energy density, and the irreversible Li loss rate is smaller when the secondary battery is charged at a high rate, which indicates better fast charging performance.

In Table 2, further research was conducted based on example 10 for the effect of the percentage of oxygen element in surface on the lithium-ion battery performance.

**Table 2**

| Example | Percentage w of oxygen element (%) | Gram capacity (mAh/g) | Initial coulombic efficiency (%) | Q (Li loss) (%) |
|---|---|---|---|---|
| Example 10 | 3.6 | 367 | 94 | 1.5 |
| Example 11 | 1.8 | 358 | 94.3 | 2.7 |
| Example 12 | 1.9 | 357 | 94.4 | 2.6 |
| Example 13 | 1.3 | 356 | 94.6 | 2.9 |
| Example 14 | 3.6 | 365 | 94.5 | 1.6 |
| Example 15 | 2.9 | 363 | 94.8 | 1.4 |
| Example 16 | 4.3 | 364 | 94.5 | 1.5 |
| Example 17 | 4.1 | 366 | 94.6 | 1.6 |
| Example 18 | 5.3 | 357 | 93.1 | 1.3 |
| Example 19 | 5.4 | 358 | 92.9 | 1.5 |
| Example 20 | 5.7 | 356 | 92.7 | 1.3 |

It can be seen from the data in Table 2 that when the percentage w of oxygen element in surface is less than or equal to 2%, the effects of increasing the gram capacity and improving the kinetic performance of the negative electrode material are insignificant. When the percentage of oxygen element in surface is greater than or equal to 5%, the gram capacity of the negative electrode material decreases instead. It may be because that excessive oxygen-containing functional groups on the surface of the negative electrode material causes an increase in side reactions between the negative electrode material and the electrolyte, causing excessively low initial coulombic efficiency and reducing actual lithium ions deintercalated reversibly. This affects the energy density of the secondary battery and electrolyte consumption during cycling. When the percentage of oxygen element in surface satisfies a relation: 2%≤w≤5%, the material can have a high gram capacity and exert excellent kinetic performance.

In Table 3, further research was conducted based on example 13 for the effect of the specific surface area A of the negative electrode material on the lithium-ion battery performance.

**Table 3**

| Example | Specific surface area A (m$^2$/g) | Gram capacity (mAh/g) | Initial coulombic efficiency (%) | Q (Li loss) (%) |
|---|---|---|---|---|
| Example 13 | 3.8 | 365 | 94.5 | 1.5 |
| Example 21 | 4.2 | 365 | 94.2 | 1.3 |
| Example 22 | 5.3 | 364 | 94.0 | 1.5 |
| Example 23 | 6.5 | 358 | 92.5 | 1.6 |
| Example 24 | 6.2 | 356 | 92.9 | 1.4 |
| Example 25 | 7.1 | 355 | 91.9 | 1.6 |

It can be seen from the data in Table 3 that when the specific surface area A satisfies a relation: 3 m$^2$/g≤A≤6 m$^2$/g, the negative electrode material has a quite high gram capacity, and the secondary battery has good fast charging performance. The negative electrode materials in examples 23 to 25 have a large specific surface area, and the active area of being exposed in an electrolyte environment is excessively large, resulting in excessive side reactions. This causes low initial coulombic efficiency and decreases the reversible capacity.

In Table 4, further research was conducted based on example 25 for the effect of the powder compacted density C of the negative electrode material on the lithium-ion battery performance.

**Table 4**

| Example | Powder compacted density C (g/cm$^3$) | Gram capacity (mAh/g) | Q (Li loss) (%) |
|---|---|---|---|
| Example 25 | 1.99 | 365 | 1.3 |
| Example 26 | 2.05 | 366 | 1.4 |
| Example 27 | 2.03 | 365 | 1.4 |
| Example 28 | 2.07 | 366 | 2.7 |
| Example 29 | 2.10 | 366 | 2.9 |
| Example 30 | 2.09 | 368 | 3.0 |

It can be seen from the data in Table 4 that when the powder compacted density C satisfies a relation: 1.95 g/cm$^3$≤C≤2.05 g/cm$^3$, the negative electrode materials in corresponding examples all have a high gram capacity. In addition, when the powder compacted density is excessively large, the layers of the graphite negative electrode material are easier to slide with respect to each other, reducing the bounce force of cold pressed electrode plate and internal pores, affecting the kinetic performance, and causing a corresponding increase in the irreversible Li loss. Thus, Li loss rates in examples 28 to 30 are higher than those in examples 25 to 27.

In Table 5, further research was conducted based on example 27 for the effect of Id/Ig of the negative electrode material on the lithium-ion battery performance.

**Table 5**

| Example | Id/Ig | Gram capacity (mAh/g) | Initial coulombic efficiency (%) | Q (Li loss) (%) |
|---|---|---|---|---|
| Example 27 | 0.023 | 365 | 94.5 | 1.4 |
| Example 31 | 0.011 | 355 | 94.9 | 3.2 |
| Example 32 | 0.012 | 354 | 94.7 | 3.4 |
| Example 33 | 0.015 | 356 | 94.8 | 3.1 |
| Example 34 | 0.038 | 365 | 94.4 | 1.5 |
| Example 35 | 0.029 | 367 | 94.3 | 1.6 |
| Example 36 | 0.033 | 364 | 94.5 | 1.2 |
| Example 37 | 0.045 | 359 | 93.9 | 1.1 |
| Example 38 | 0.043 | 358 | 93.7 | 1.2 |
| Example 39 | 0.047 | 357 | 93.5 | 1.4 |

It can be seen from the data in Table 5, when Id/Ig of the negative electrode material is less than or equal to 0.02, the surface treatment level is excessively shallow without pores and defect structures formed, thus showing a low gram capacity and high irreversible Li loss during fast charging. When Id/Ig exceeds 0.4, excessive surface defects are formed. This can alleviate the irreversible Li loss during fast charging to some extent, but will cause easy side reactions with the electrolyte, resulting in excessive Li consumption during the first charge and low initial coulombic efficiency, thus reducing the gram capacity. When Id/Ig satisfies a relation 0.2≤Id/Ig≤0.4, the material can have both a high gram capacity and good kinetic performance.

Although illustrative embodiments have been demonstrated and described, a person skilled in the art should understand that the foregoing embodiments are not to be construed as limiting this application, and that the embodiments may be changed, replaced, and modified without departing from the spirit, principle, and scope of this application.

**Claims**

1. A negative electrode material, comprising a carbon-based material; wherein in a nitrogen adsorption/desorption test, the negative electrode material satisfies: S1/S2≥20%, and S2/S≥15%;
   wherein S1 represents an adsorption volume of pores with a pore size less than or equal to 2 nm in the negative electrode material, and 0.0003 $cm^3$/g≤S1≤0.001 $cm^3$/g; S2 represents an adsorption volume of pores with a pore size greater than 2 nm and less than or equal to 10 nm in the negative electrode material, and 0.0008 $cm^3$/g≤S2≤0.0025 $cm^3$/g; and S represents an adsorption volume of pores with a pore size less than or equal to 30 nm in the negative electrode material.

2. The negative electrode material according to claim 1, wherein 20%≤S1/S2≤60%; and/or 15%≤S2/S≤50%.

3. The negative electrode material according to claim 1, wherein 30%≤S1/S2≤50%; and/or 0.006 $cm^3$/g≤S≤0.008 $cm^3$/g.

4. The negative electrode material according to claim 1, wherein the carbon-based material comprises natural graphite and/or artificial graphite.

5. The negative electrode material according to claim 1, wherein the negative electrode material satisfies at least one of the following conditions (i) to (iv):

   (i) in an X-ray photoelectron spectroscopy test, a mass percentage of oxygen element in a surface of the negative electrode material is w, and 1%≤w≤6%;
   (ii) a specific surface area of the negative electrode material is A, and 3.0 $m^2$/g≤A≤8.0 $m^2$/g;
   (iii) a powder compacted density of the negative electrode material is C, and 1.9 $g/cm^3$≤C≤2.1 $g/cm^3$; or
   (iv) in a Raman test, the negative-electrode active material satisfies 0.1≤Id/Ig≤0.5, wherein Id represents an intensity of a peak at 1350 $cm^{-1}$ in a Raman spectrum, and Ig represents an intensity of a peak at 1580 $cm^{-1}$ in the Raman spectrum.

6. The negative electrode material according to claim 5, wherein the negative electrode material satisfies at least one of the following conditions (v) to (viii):

$$(v)\ 2\%\leq w\leq 5\%;$$

$$(vi)\ 3.0\ m^2/g\leq A\leq 6.0\ m^2/g;$$

$$(vii)\ 1.95\ g/cm^3/\leq C\leq 2.05\ g/cm^3;$$

or

$$(viii)\ 0.2\leq Id/Ig\leq 0.4.$$

7. The negative electrode material according to claim 1, wherein a preparation method of the negative electrode material comprises: performing heat treatment on a graphite material with a pre-treated surface in an oxidizing atmosphere at a temperature of 200°C to 500°C.

8. A secondary battery, comprising a negative electrode, wherein the negative electrode comprises a negative-electrode active material layer, and the negative-electrode active material layer comprises a negative electrode material according to any one of claims 1 to 7.

9. The secondary battery according to claim 8, wherein a compacted density of the negative electrode is P, and 1.75 $g/cm^3$/≤P≤1.85 $g/cm^3$; and/or
   in an X-ray diffraction test, a ratio of a diffraction peak area C004 of a crystal plane 004 of the negative electrode to a diffraction peak area C110 of a crystal plane 110 satisfies 8≤C004/C110≤18.

10. An electronic apparatus, comprising the secondary battery according to claim 8 or 9.

BJH pore size distribution

FIG. 1

## Coin Cell

FIG. 2

FIG. 3

FIG. 4

## INTERNATIONAL SEARCH REPORT

| International application No. |
|---|
| **PCT/CN2022/123061** |

**A.    CLASSIFICATION OF SUBJECT MATTER**

H01M4/583(2010.01)i

According to International Patent Classification (IPC) or to both national classification and IPC

**B.    FIELDS SEARCHED**

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 负极, 碳, 氮气, 吸附, 孔径, 体积, negative w electrode, carbon, nitrogen, adsorp+, pore w size, volume

**C.    DOCUMENTS CONSIDERED TO BE RELEVANT**

| Category* | Citation of document, with indication, where appropriate, of the relevant passages | Relevant to claim No. |
|---|---|---|
| A | US 2021391577 A1 (HUNAN JINYE HIGH-TECH CO., LTD.) 16 December 2021 (2021-12-16) <br> description, paragraphs 5-12 | 1-10 |
| A | CN 113207314 A (NINGDE CONTEMPORARY AMPEREX TECHNOLOGY CO., LTD.) 03 August 2021 (2021-08-03) <br> entire document | 1-10 |
| A | US 2009023066 A1 (FUJI JUKOGYO KABUSHIKI KAISHA) 22 January 2009 (2009-01-22) <br> entire document | 1-10 |
| A | US 2015349341 A1 (HITACHI LTD.) 03 December 2015 (2015-12-03) <br> entire document | 1-10 |
| A | WO 2021241747 A1 (SHOWA DENKO K. K.) 02 December 2021 (2021-12-02) <br> entire document | 1-10 |

☐ Further documents are listed in the continuation of Box C.      ☑ See patent family annex.

| | |
|---|---|
| *    Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **16 May 2023** | **24 May 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/123061**

| Patent document cited in search report | | | Publication date (day/month/year) | Patent family member(s) | | | Publication date (day/month/year) |
|---|---|---|---|---|---|---|---|
| US | 2021391577 | A1 | 16 December 2021 | KR | 20210068497 | A | 09 June 2021 |
| | | | | JP | 2022502827 | A | 11 January 2022 |
| | | | | JP | 7128961 | B2 | 31 August 2022 |
| | | | | EP | 3865457 | A1 | 18 August 2021 |
| | | | | EP | 3865457 | A4 | 27 July 2022 |
| | | | | WO | 2020073803 | A1 | 16 April 2020 |
| | | | | CN | 109553080 | A | 02 April 2019 |
| | | | | CN | 109553080 | B | 01 May 2020 |
| CN | 113207314 | A | 03 August 2021 | WO | 2021108983 | A1 | 10 June 2021 |
| | | | | EP | 3879601 | A1 | 15 September 2021 |
| | | | | US | 2021313575 | A1 | 07 October 2021 |
| | | | | KR | 20220064387 | A | 18 May 2022 |
| | | | | IN | 202227019494 | A | 20 May 2022 |
| | | | | JP | 2022550187 | W | 30 November 2022 |
| US | 2009023066 | A1 | 22 January 2009 | WO | 2006118120 | A1 | 09 November 2006 |
| | | | | US | 8142930 | B2 | 27 March 2012 |
| | | | | KR | 20080000614 | A | 02 January 2008 |
| | | | | KR | 101026433 | B1 | 07 April 2011 |
| | | | | EP | 1876663 | A1 | 09 January 2008 |
| | | | | EP | 1876663 | A4 | 29 September 2010 |
| | | | | EP | 1876663 | B1 | 05 April 2017 |
| | | | | JPWO | 2006118120 | A1 | 18 December 2008 |
| | | | | JP | 5322435 | B2 | 23 October 2013 |
| | | | | CN | 101167208 | A | 23 April 2008 |
| | | | | CN | 101167208 | B | 19 September 2012 |
| US | 2015349341 | A1 | 03 December 2015 | JP | 2014011093 | A | 20 January 2014 |
| | | | | JP | 6002475 | B2 | 05 October 2016 |
| | | | | WO | 2014007035 | A1 | 09 January 2014 |
| WO | 2021241747 | A1 | 02 December 2021 | WO | 2021241748 | A1 | 02 December 2021 |
| | | | | EP | 4160728 | A1 | 05 April 2023 |
| | | | | KR | 20230016213 | A | 01 February 2023 |
| | | | | EP | 4160727 | A1 | 05 April 2023 |
| | | | | KR | 20230015992 | A | 31 January 2023 |
| | | | | CN | 115667136 | A | 31 January 2023 |

Form PCT/ISA/210 (patent family annex) (July 2022)